# EUROPÄISCHE PATENTSCHRIFT

(11) **EP 0 449 071 B1**
(45) Veröffentlichungstag und Bekanntmachung des Hinweises auf die Patenterteilung: **01.03.1995**
(21) Anmeldenummer: 91104120.0
(22) Anmeldetag: 16.03.1991
(51) Int. Cl.: B01D 61/44, C25B 1/22, C25B 1/16

(54) **Verfahren zur elektrochemischen Spaltung von Alkalisulfaten**
Process for the electrochemical separation of alkali-sulphates
Procédé pour la dissociation électrochimique de sulfates alcalins

(30) Priorität: 23.03.1990 DE 4009410
(43) Veröffentlichungstag der Anmeldung: 02.10.1991
(73) Patentinhaber: BASF Aktiengesellschaft, 67063 Ludwigshafen (DE)
(72) Erfinder: Habermann, Wolfgang, W-6500 Mainz (DE); Bochnitschek, Werner, Dr., W-6700 Ludwigshafen (DE); Fritzmann, Johann, Dr., W-6900 Heidelberg (DE); Hammes, Peter, Dr., W-6701 Ruppertsberg (DE); Proll, Theo, Dr., W-6702 Bad Duerkheim (DE); Weisbrodt, Walter, Dr., W-6705 Deidesheim (DE)

(56) Entgegenhaltungen:
- EP-A- 0 096 239
- DE-A- 3 529 649
- FR-A- 1 089 388
- US-A- 4 636 295

## Beschreibung

Die vorliegende Erfindung betrifft ein Verfahren zur elektrochemischen Spaltung von Alkalisulfaten in Alkalilaugen und Schwefelsäure in einer dreigeteilten Elektrodialysezelle.

Bei der Elektrolyse von Natriumsulfat nach dem Amalgamverfahren erhält man eine 20 gew.-%ige Schwefelsäure mit ∼ 15 Gew.-% Natriumhydrogensulfat und Natriumamalgam. Das gebildete Natriumamalagen wird in separaten Zersetzern zu Natronlauge umgesetzt, während die salzhaltige Schwefelsäure in aufwendigen Verfahrensschritten aufgearbeitet werden muß. Der erforderliche Energieverbrauch liegt mit 3900 bis 4200 kWh/t NaOH 1 kWh = 3,6 x 10⁶ J sehr hoch. Die relativ hohen Energiekosten und insbesondere die Quecksilberproblematik behindern heute eine technische Ausübung dieses Verfahrens.

Neuere Entwicklungen unter Verwendung von Kationen- und Anionenaustauschermembranen führen zu einfach oder mehrfach geteilten Elektrolyse- bzw. Elektrodialysezellen.

In einer durch Kationenaustauschermembran zweigeteilten Elektrolysezelle, wo die Sulfatlösung dem Anodenraum zugeführt wird, erhält man eine ∼ 10 %ige salzhaltige Schwefelsäure und 15 bis 25 %ige Natronlauge bei Stromausbeuten von 65 bis 70 %. Der Energieverbrauch liegt bei > 4000 kWh/t NaOH. Ein technischer Einsatz dieses Prozesses scheitert an der unwirtschaftlichen Aufarbeitung der verdünnten, salzhaltigen Schwefelsäure und den geringen Stromausbeuten.

Eine weitere Verfahrenskonzeption ist die Elektrodialyse in einer mit einer Kationen- und Anionenaustauschermembran dreigeteilten Zelle. Bei diesem Verfahren durchströmt die Alkalisulfatlösung die Mittelkammer der Elektrodialysezelle. Im Kathodenraum werden bei einer Betriebstemperatur von + 50°C und Stromdichten von 0,8 bis 1 kA/m² etwa 15 bis 20 %ige Alkalilaugen sowie im Anodenraum eine 5 bis 15 %ige Schwefelsäure bei Stromausbeuten von 60 bis 80 % erhalten. Der Energieverbrauch beträgt etwa 4000 kWh/t NaOH. Einer technischen Anwendung steht neben dem hohen Energieverbrauch die unzureichende Selektivität und Standzeit der bisher auf dem Markt befindlichen Anionenaustauschermembranen entgegen. Siehe hierzu Chem.-Ing.-Techn. 61 (1989) Nr. 12, Seiten 934/935.

Neben dieser Verfahrenskonzeption wurde die Elektrodialyse unter Einsatz von bipolaren Membranen entwickelt. Bei der bipolaren Membran ist eine Kationen- mit einer Anionenaustauschermembran fest verbunden. Siehe hierzu Chem.-Ing.-Techn. 61 (1989) Nr. 12, Seite 935. Die bipolare Membran wird auf der Anionenaustauscherseite durch eine Kationenaustauschermembran und auf der kationenaustauschenden Membranseite durch eine Anionenaustauschermembran von dem alkalisulfathaltigen Elektrolyten separiert. Bei der Elektrodialyse wandern Alkalikationen durch die Kationenaustauschermembran in die Kammer, die von der Anionenaustauscherseite der bipolaren Membran begrenzt wird, während die Sulfationen durch die Anionenaustauschermembran in die Kammer vor die Kationenaustauscherseite der bipolaren Membran wandern. Gleichzeitig kommt es zur Dissoziation von Wasser im elektrischen Feld an der Phasengrenze Kationen-Anionenaustauschermembran, wodurch auf der Anionenaustauscherseite der bipolaren Membran Natronlauge und auf der Kationenaustauscherseite Schwefelsäure anfällt. Die Elektrodialyse mit bipolaren Membranen wird bei einer Temperatur von + 45°C und Stromdichten von ≦ 0,5 kA/m² durchgeführt. Nach Literaturangaben liegt der Energieverbrauch bei ∼ 1700 kWh/t NaOH. Unbefriedigend bei dieser Verfahrenstechnik ist, daß die bipolaren Membranen nicht selektiv sind, wodurch nur verdünnte salzhaltige Schwefelsäuren von 5 bis 10 Gew.-% und salzhaltige Alkalilaugen von 8 bis 10 Gew.-% anfallen. Hinzu kommt als wesentlicher Nachteil, daß die ladungstragenden, quaternären Ammoniumgruppen der Anionenaustauscherseite der bipolaren Membranen in der Alkalilauge abgebaut werden. Für eine technische Aufarbeitung von Alkalisulfaten zu höher konzentrierten Alkalilaugen und Schwefelsäure scheidet dieses Verfahren daher aus.

Aufgabe der vorliegenden Erfindung ist es die elektrochemische Spaltung von Alkalisulfaten zu Alkalilaugen und Schwefelsäure in einer durch Ionenaustauschermembranen dreigeteilten Elektrolysezelle so durchzuführen, daß man salzfreie Alkalilaugen und Schwefelsäure in technisch verwertbaren Konzentrationen bei hohen Stromausbeuten und einem geringen Energieverbrauch erhält.

Die Aufgabe wird durch das Verfahren nach Anspruch 1 gelöst. Bevorzugte Varianten sind in den abhängigen Ansprüchen aufgeführt.

Als polymere Ionenaustauschermatrix wird ein Styrol-Divinylbenzol-Copolymerisat mit einem Anteil von 4 bis 16, vorzugsweise 6 bis 8 Massen-% Divinylbenzol verwendet. Die Polystyrolhauptkette kann zusätzlich vernetzt sein, z.B. über Polymethylen- oder Polyethylengruppen. In der polymeren Matrix werden stark basische, quervernetzte, quaternäre Ammoniumgruppen von Typ R-CH₂-N(CH₃)₃+ verwendet.

Die Totalkapazität sollte in der polymeren Ionenaustauschermatrix mit den stark basischen, quervernetzten, quaternären Ammoniumgruppen 1,4 bis 1,6 mval/ml betragen.

Die Blockierung der Permeation von Hydroniumionen wird zum Teil durch den Anteil und die spezielle Vernetzung des Divinylbenzols erreicht. Der Divinylbenzolanteil sollte vollständig vernetzt sein, wobei durch Quervernetzung ein prozentual er Vernetzungsgrad anzustreben ist, der dem doppelten prozentualen Anteil an Divinylbenzol entspricht.

Als Hydroniumionenblocker sind außerdem in der Ionenaustauschermatrix mit den stark basischen quaternären Ammoniumgruppen niedermolekulare tertiäre oder sekundäre Amine verankert.

Zur Verbesserung der Selektivität können in die Oberfläche der Anionenaustauscherschicht oder Membran mit den stark basischen ladungstragenden quaternären Ammoniumgruppen zusätzlich stark basische quaternäre Ammoniumgruppen in hoher Konzentration eingebracht werden. Diese ladungstragenden Gruppen werden z.B. mit Chlormethylether in Gegenwart von Aluminiumchlorid sowie anschließender Umsetzung mit Trimethylamin erzeugt, wodurch eine weitere Vernetzung der polymeren Matrixoberfläche über die Methylenbrücken erfolgt und eine isopore Struktur der Ionenaustauscheroberfläche erreicht wird.

Als Stützgewebe für die polymere Ionenaustauschermatrix wird Polypropylen oder Polyethylen verwendet, wobei die Anbindung des Stützgewebes an die polymere Matrix mit Hilfe eines vernetzten Polyethylens erfolgt, so daß eine hohe Temperaturbeständigkeit und Selektivität erreicht wird.

Als besonders günstig hat sich ein Verfahren zur Herstellung der Anionenaustauschermembran erwiesen, bei dem man eine Paste verwendet, die aus einem Gemisch besteht, das als wesentliche Komponenten Monomere mit funktionellen Gruppen, die zum Einführen von Ionenaustauschgruppen geeignet sind, Vernetzer und Polymerisationsinitiatoren und Polyethylen-Feinpulver mit einem Korndurchmesser von weniger als 10 »m enthält, auf ein tuchartiges Substrat aus Polyethylen aufbringt und polymerisiert, um dann die Ionenaustauschgruppen einzuführen.

Wichtig bei dieser Fertigung ist, daß man die Paste dadurch herstellt, daß man einem Gemisch, das als hauptsächliche Komponenten Monomere mit funktionellen Gruppen, die zum Einführen der Ionenaustauschgruppen geeignet sind, sowie Vernetzer und Polymerisationsinitiatoren enthält, kugelartiges Polyethylen-Feinpulver mit einem Korndurchmesser von weniger als 10 »m zusetzt. Nach der vorliegenden Erfindung ist nämlich durch die Verwendung von kugelartigem Polyethylen-Feinpulver mit einem Korndurchmesser von weniger als 10 »m ein Gemisch mit gewöhnlich 25 bis 200 Gew.-% möglich, bezogen auf ein bestimmtes Monomerengemisch. Das Gemisch kann man dann als viskose und fadenziehende Paste erhalten, die man auf ein als Verstärkungsmaterial dienendes tuchartiges Substrat aus Polyethylen gleichmäßig aufträgt.

Eine Paste mit Monomeren, die viel von solchem Polyethylen-Feinpulver enthält, wird gleichmäßig auf ein tuchartiges Substrat aus Polyethylen aufgetragen und polymerisiert. Dadurch bildet sich die Zusammensetzung mit der sogenannten "Meer-Insel-Struktur" mit dem Polyethylen-Feinpulver als Meer und den entstandenen Ionenaustauscherteilen als Inseln. Teile mit der Meer-Insel-Struktur, die sich durch viel Polyethylen-Feinpulver gebildet haben, zeigen eine gute Haftung, weil sie mit dem Substrat aus Polyethylen leicht thermisch verschmelzen.

Bevorzugt fertigt man solche Anionenaustauschermembranen wie folgt:
Zu 70 Gewichtsteilen Chlormethylstyrol, 15 Gewichtsteilen Divinylbenzol, 2 Gewichtsteilen Benzylperoxid und 2 Gewichtsteilen NBR-Kautschuk gibt man 70 Gewichtsteile Polyethylen-Feinpulver niederer Dichte (Flow Beads LE-108, Warenzeichen) mit einem Schmelzpunkt von 110°C und Kugelform mit einem mittleren Korndurchmesser von 7 »m. Die dabei entstehende Paste streicht man auf ein als Verstärkungsmaterial dienendes Gewebe mit 100 Maschen aus Polyethylen hoher Dichte, beschichtet das Ganze mit einer Tetoron-Folie (aus Polyester der Firma Teijin) als Abziehmaterial und polymerisiert 8 Stunden bei 105°C.

Das anfallende membranartige makromolekulare Polymer aminiert man in einer wäßrigen Lösung mit 10 Gew.-% Trimethylamin und 20 Gew.-% Aceton und erhält so eine besonders geeignete Anionenaustauschermembran mit einem elektrischen Widerstand von 6,2 Ω / cm².

Zum Schutz der Anionenaustauschermembran gegenüber Verschmutzungen und zur weiteren Verbesserung der Selektivität wird auf der Anionenaustauscherseite, die sich in der Mittelkammer befindet, eine weitere Anionenaustauscherschicht mit tertiären oder sekundären Aminogruppen als Hydroniumionenblocker aufgebracht. In dieser Membran werden bevorzugt als tertiäre oder sekundäre Aminogruppen R-CH₂-N(CH₃)₂- oder R-NH(CH₂CH₂NH)ₙ-Gruppen verwendet.

Die elektrochemische Spaltung des Alkalisulfats erfolgt bei Temperaturen von ≧ +70°C und ≦+150°C, vorzugsweise bei Temperaturen von +80°C bis +95°C. Um hohe Schwefelsäure- und Natronlaugekonzentration bei hohen Stromausbeuten zu erreichen, müssen die Stromdichten von 2 bis 15 KA/m², vorzugsweise von 3 bis 10 KA/m² betragen.

Der pH-Wert in der natriumsulfathaltigen Mittelkammer sollte während der elektrochemischen Spaltung im Bereich von ≧ 0,5 und ≦ 8 vorzugsweise zwischen 4 und 7,5 liegen.

Als Elektrodenmaterialien werden vorzugsweise perforierte Materialien verwendet, die z.B. in Form von Netzen, Lamellen, Ovalprofilstegen oder Rundprofilstegen ausgeführt sind.

Die Sauerstoffüberspannung der Anoden sollte in dem beanspruchten Stromdichtebereich weniger als 400 mV betragen, damit es im schwefelsauren Anolyten nicht zur Bildung von Ozon und Perverbindungen kommt, so daß ein oxidativer Angriff der Anionenaustauschermembran vermieden wird.

Geeignete Anodenmaterialien mit geringen Sauerstoffüberspannungen für den schwefelsäurehaltigen Anolyten sind z.B. Titanträger mit elektrisch leitenden Zwischenschichten aus Boriden und/oder Carbiden und/oder Siliciden der IV. bis VI. Nebengruppe oder Zinnoxiden oder gegebenenfalls mit Platinmetallen dotierten Tantal und/oder Niob, deren Oberfläche mit elektrisch leitenden, nicht stöchiometrischen Mischoxiden aus Ventilmetallen der IV. bis VI. Nebengruppe des periodischen Systems der Elemente und Metallen oder Metalloxiden der Platingruppe oder Platinmetallverbindungen wie z.B. Platinaten dotiert sind. Bevorzugt kommen Mischoxide des Tantal-Iridiums, Tantal-Platins und Tantal-Rhodiums sowie Platinate vom Typ Li_{0,3}Pt₃O₄ in Betracht. Zur Vergrößerung der Oberfläche sollten die Titanträger oberflächlich aufgerauht oder makroporös sein.

Als Kathoden werden Elektrodenmaterialien mit einer niedrigen Wasserstoffüberspannung eingesetzt, um zusätzliche Spannungsverluste in der Elektrodialysezelle zu vermeiden. Geeignete Kathoden sind z.B. Eisen- oder Nickelträger, die oberflächlich mit feinteiligem Kobalt, Nickel, Molybdän, Wolfram, Mangan, Raneymetallverbindungen des Nickels oder Kobalts oder Nickel-Eisenlegierungen oder Kobalt-Eisenlegierungen mit 65 Gew.-% bis 90 Gew.-% Eisen beschichtet sind.

Zur Verminderung des Spannungsverlustes in der Mittelkammer der Elektrodialysezelle sollte der Abstand zwischen der Kationen- und Anionenaustauschermembran nicht mehr als 5 mm betragen. Als vorteilhaft hat sich ein Abstand von 2,5 bis 3,5 mm zwischen den Membranen erwiesen.

In der Mittelkammer können die Alkalisulfatkonzentrationen zwischen 0,5 Gew.-% und der Sättigungsgrenze liegen. Bevorzugt sind Alkalisulfatgehalte von 10 Gew.-% bis zur Sättigungsgrenze. Als Alkalisulfate kommen vorzugsweise die Sulfate des Natriums- oder Kaliums in Betracht.

Zur Verbesserung der Selektivität und der Membranstandzeiten können der Natriumsulfatlösung 0,001 bis 2 Gew.-% Ammoniak oder primäre, sekundäre oder tertiäre Amine, z.B. mit Alkylresten mit 1 bis 4 Kohlenstoffatomen am Stickstoffatom, die auch eine Hydroxylgruppe oder Alkoxygruppe als Substituenten haben können, zugesetzt werden. Geeignete Amine sind beispielsweise Trimethylamin oder Triethylamin. Geeignet sind ferner cyclische Amine, wie Aminoethylmorpholin, Aminoethylpyrrolidin oder Cyclohexylamin sowie Polyamine, die durch Umsetzung von Aminen mit Ethylenimin erhältlich sind.

Vorzugsweise setzt man leichtflüchtige Amine oder solche Amine ein, die aufgrund ihrer Molekülgröße nicht durch Kationenaustauschermembran wandern können, so daß ohne großen verfahrenstechnischen Aufwand reine Alkalilaugen erhalten werden.

Als Kationenaustauschermembranen werden bevorzugt Polymere auf Basis von perfluorierten Olefinen oder Copolymere aus Tetrafluorethylen mit ungesättigten perfluorierten Ethern oder Copolymere aus Styrol und Divinylbenzol verwendet, die als ladungstragende Gruppen Sulfonsäure- und Carboxylgruppen oder nur Sulfonsäuregruppen enthalten. Bevorzugt werden Membranen verwendet, die nur Sulfonsäuregruppen enthalten, da sie wesentlich beständiger gegenüber Einlagerungen und Verschmutzungen durch mehrwertige Kationen sind.

Zur Erhöhung der Gesamtausbeute der elektrochemischen Alkalisulfatspaltung nutzt man zweckmäßigerweise die durch den ohmschen Spannungsverlust in der Elektrodialysezelle anfallende thermische Energie zur Aufkonzentrierung der Säure und Lauge aus. Dies kann z.B. durch Absenkung der Wasserdampfpartialdrücke im Anolyt- und Katolytgasraum, oder durch nachgeschaltete Vakuumeindampfer, vorzugsweise eine mehrstufige Eindampfung erreicht werden. Die Absenkung der Wasserdampfpartialdrücke kann z.B. dadurch erfolgen, daß man einen Teil des an der Anode bzw. Kathode entstehenden Gases vom Wasserdampf befreit und im Kreislauf führt.

Das erfindungsgemäße Verfahren eignet sich insbesondere zur Aufarbeitung von wäßrigen Natriumsulfatlösungen mit einem Natriumsulfatgehalt von ≧ 10 Gew.-%. Die elektrochemische Spaltung in der dreigeteilten Elektrodialysezelle ist durch die Verwendung der Anionenaustauscherschicht oder Membran mit den tertiären oder sekundären Aminogruppen auf der Anionenaustauscherseite in der Mittelkammer sowie durch den Einsatz von geringen Mengen Ammoniak oder Aminen im natriumsulfathaltigen Elektrolyten der Mittelkammer, weitgehend unempfindlich gegenüber organischen oder an anorganischen Verunreinigungen in der Alkalisulfatlösung.

### Beispiel 1

Eine dreigeteilte Elektrodialysezelle wird mit einer Anode und Kathode von je 1 dm² Elektrodenfläche bestückt. Als Anode wird ein Ovalprofilträger von 2,5 mm Einzelstegdurchmesser und 1 mm Stegabstand verwendet. Auf der Oberfläche des Titanträgers befindet sich eine durch Plasmabeschichtung aufgetragene Legierung bestehend aus 40 Gew.-% Tantal, 58,5 Gew.-% Wolfram und 1,5 Gew.-% Eisen, die mit einem Tantal-Iridiummischoxid dotiert ist. Die Kathode hat die gleiche Form wie die Anode und besteht aus kohlenstoffarmen Eisen. Zur Verminderung der Wasserstoffüberspannung wurde mit Hilfe eines Plasmabrenners auf die Eisenoberfläche eine Legierung aus 80 Gew.-% Eisen und 20 Gew.-% Nickel aufgetragen. Der Anodenraum, in dem die Schwefelsäure erzeugt wird, ist durch eine Anionenaustauschermembran von der Mittelkammer, in der sich die Alkalisulfatlösung befindet, separiert. Als Anionenaustauschermembran wird ein Styrol-Divinylbenzol-Copolymerisat mit 6 Massen% Divinylbenzol und quervernetzten quaternären Ammoniumgruppen vom Typ R-CH₂-N(CH₃)₃⁺ sowie einer vernetzten Polyethylenstützschicht in "Meer-Insel-Struktur" verwendet. Der Gesamtvernetzungsgrad in dieser Membran beträgt etwa 12 %. Diese Ionenaustauschermembran enthält zur Mittelkammer eine weitere Anionenaustauschermembran, die niedermolekulare Aminogruppen vom Typ R-CH₂-N(CH₃)₂ RNH(CH₂CH₂NH)ₙ⁺ als Hydroniumionenblocker vom Typ enthält. Als Kationenaustauschermembran wird ein Polymer auf Basis perfluorierten Olefinen mit Sulfonsäuregruppen der Firma Du Pont vom Typ 324 verwendet.

Der Abstand zwischen der Anionen- und Kationenaustauschermembran in der Mittelkammer beträgt 2,5 mm. Die Anode und Kathode liegt direkt auf der Kationenaustauschermembran bzw. Anionenaustauschermembran auf. Der Anoden- und Kathodenraum der Elektrodialysezelle besitzt je einen Naturumlauf für den Anolyten bzw. Katolyten. Die Mittelkammer wird im Kreislauf über ein Vorlagegefäß, das wieder mit Natriumsulfat aufgesättigt werden kann, von der alkalisulfathaltigen Losung durchströmt.

Zu Beginn der Elektrodialyse wird im Anolytkreislauf eine 2,5 gew.-%ige Schwefelsäure, im Katolytkreislauf eine 2,5 gew.-%ige Natronlauge und im Mittelkammerkreislauf eine 32 gew.-%ige, wäßrige Natriumsulfatlösung mit 0,05 Gew.-% Ammoniak eingefüllt.

Die Betriebsbedingungen während der Elektrodialyse sind wie folgt:

| | |
|---|---|
| Stromdichte | 3 kA/m² |
| Zellspannung | 4,5 bis 4,3 V |
| Temperatur | 82 bis 85°C |

Zusätzlich werden der säurehaltige Anolyt und Katolyt getrennt einem Vakuumeindampfer zugeführt. Auf diese Weise wird die bei der Elektrodialyse anfallende überschüssige Wärmeenergie zur weiteren Aufkonzentrierung der Säure und Lauge ausgenutzt. Unter den beschriebenen Versuchsbedingungen werden in Abhängigkeit von den aufgeführten Endsäure- und Endlaugekonzentrationen die folgenden Stromausbeuten im Batchbetrieb erreicht:

| Stromausbeute % | NaOH-Konzentration % | H₂SO₄-Konzentration % |
|---|---|---|
| 80 | 25 bis 28 | 38 bis 40 |
| 70 | 36 bis 38 | 55 bis 57 |
| 60 | 42 bis 43 | 66 bis 68 |

Der Natriumgehalt in der Schwefelsäure beträgt ≦ 30 ppm und der Sulfatgehalt in der Natronlauge ≦ 20 ppm.

Die Elektrolyse kann auch kontinuierlich betrieben werden. Bei dieser Betriebsweise schaltet man 6 bis 8 Einzelzelleinheiten zu einer Kaskadenstufe zusammen. In der Kaskade wird die Säure und Lauge im Gegenstrom zur Natriumsulfatlösung geführt, damit die gleichen Ergebnisse wie beim Batchbetrieb erhalten werden.

Führt man die Elektrodialyse statt bei + 82 bis +85°C, unter sonst gleichen Bedingungen bei +40°C durch, so erhält man folgende Ergebnisse:

| Stromausbeute % | NaOH-Konzentration % | H₂SO₄-Konzentration % |
|---|---|---|
| 80 | ∼ 12 | ∼ 17 |
| 70 | ∼ 19 | ∼ 26 |
| 60 | ∼ 22 | ∼ 32 |

### Vergleichsbeispiel

Ersetzt man die beiden Anionenaustauschermembranen durch ein handelsübliches Styrol-Divinylbenzol-Copolymerisat, das als stark basische Gruppen nur R-N(CH₃)₂(C₂H₄OH)+-Gruppen enthält und führt die Elektrodialyse bei +40°C unter den gleichen Bedingungen wie vorangehend durch, so werden die folgenden Säure- und Laugekonzentrationen in Abhängigkeit von der Stromausbeute erhalten:

| Stromausbeute % | NaOH-Konzentration % | H₂SO₄-Konzentration % |
|---|---|---|
| 80 | ∼ 8 | ∼ 4 |
| 70 | ∼ 12 | ∼ 8 |
| 60 | ∼ 18 | ∼ 12 |

Ein Einsatz dieser Membrantypen bei Temperaturen über +50°C, um bessere Stromausbeuten zu erreichen, ist nicht möglich, da die ladungstragende polymere Matrix über Polyvinylchlorid an das Stützgewebe angebunden ist.

## Patentansprüche

1. Verfahren zur Spaltung von Alkalisulfaten in Schwefelsäure und Alkalilaugen in einer dreigeteilten Elektrodialysezelle, deren Anodenraum durch eine Anionenaustauschermembran und deren Kathodenraum durch eine Kationenaustauschermembran von der Mittelkammer separiert ist, wobei der Anodenraum mit verdünnter wäßriger Schwefelsäure, der Kathodenraum mit verdünnter wäßriger Alkalilauge und die Mittelkammer mit wäßriger Alkalisulfatlösung beschickt wird, dadurch gekennzeichnet, daß man die Elektrodialyse bei Temperaturen von +70°C bis +110°C und Stromdichten von 2 bis 15 kA/m² mit einer Anionenaustauschermembran durchführt, deren polymere Matrix aus einem Styrol-Divinylbenzol-Copolymerisat mit stark basischen quervernetzten quaternären Ammoniumgruppen vom Typ R-CH₂-N-(CH₃)₃⁺ mittels eines vernetzten Polyethylens an ein Stützgewebe angebunden ist, wobei sich auf der Anionenaustauschermembran zur Mittelkammerseite eine weitere Ionenaustauscherschicht befindet, die niedermolekulare sekundäre und/oder tertiäre Aminogruppen als Hydroniumionenblocker enthält.

2. Verfahren nach Anspruch 1 bis 3, dadurch gekennzeichnet, daß perforierte Elektrodenmaterialien verwendet werden, die direkt auf den Ionenaustauschermembranoberflächen aufliegen.

3. Verfahren nach Anspruch 1 bis 4, dadurch gekennzeichnet, daß Anoden verwendet werden, deren Sauerstoffüberspannungen in dem beanspruchten Stromdichtebereich weniger als 400 mV betragen.

4. Verfahren nach Anspruch 1 bis 5, dadurch gekennzeichnet, daß der Abstand zwischen der Kationen- und Anionenaustauschermembran in der Mittelkammer ≦ 5 mm beträgt.

5. Verfahren nach Anspruch 1 bis 6, dadurch gekennzeichnet, daß in der Mittelkammer bevorzugt 10 gew.-%ige bis gesättigte Alkalisulfatlösungen eingesetzt werden.

6. Verfahren nach Anspruch 1 bis 7, dadurch gekennzeichnet, daß die Zulaufkonzentrationen für die Alkalilauge und Schwefelsäure 0,2 bis 5 Gew.-%, die Ablaufkonzentrationen für die Alkalilaugen 25 bis 40 Gew.-% und die Ablaufkonzentrationen für die Schwefelsäure 30 bis 70 Gew.-% betragen.

7. Verfahren nach Anspruch 1 bis 8, dadurch gekennzeichnet, daß der Alkalisulfatlösung 0,001 bis 2 Gew.-% Ammoniak oder primäre, sekundäre oder tertiäre Amine mit Alkylresten mit 1 bis 4 Kohlenstoffatomen am Stickstoffatom, die auch eine Hydroxyl- oder Alkoxygruppe als Substituenten haben können, zugesetzt werden.

8. Verfahren nach Anspruch 1 bis 9, dadurch gekennzeichnet, daß die durch den ohmschen Spannungsverlust in der Elektrodialysezelle anfallende thermische Energie zur Aufkonzentrierung der Schwefelsäure und Alkalilaugen ausgenutzt wird.

## Claims

1. A process for the breakdown of alkali metal sulfates into sulfuric acid and alkali metal hydroxide solutions in a three-compartment electrodialysis cell where the anode compartment and the cathode compartment are separated from the central compartment by, respectively, an anion exchange membrane and a cation exchange membrane, the anode, cathode and central compartments being charged, respectively with dilute agueous sulfuric acid, dilute aqueous alkali metal hydroxide solutions and aqueous alkali metal sulfate solution, which comprises performing the electrodialysis at a temperature of from +70 to +110°C and at a current density of from 2 to 15 kA/m² using an anion exchange membrane whose polymeric matrix consisting of a styrene/divinylbenzene copolymer having strongly basic crosslinked quaternary ammonium groups of the type R-CH₂N-(R₃)₃⁺ is attached to a support fabric by a crosslinked polyethylene, there being situated on the anion exchange membrane, on the central compartment side, a further ion exchange layer which contains low molecular weight secondary and/or tertiary amino groups as hydronium ion blocker.

2. A process as claimed in claim 1, wherein the electrode materials used are perforated and rest directly on the ion exchange membrane surfaces.

3. A process as claimed in claims 1 or 2, wherein the oxygen overvoltage of the anode used is less than 400 mV within the claimed current density range.

4. A process as claimed in any of claims 1 to 3, wherein the distance between the cation exchange membrane and the anion exchange membrane in the central compartment is ≦ 5 mm.

5. A process as claimed in any of claims 1 to 4, wherein the alkali metal sulfate solution used in the central compartment preferably has a concentration within the range from 10% by weight to saturated.

6. A process as claimed in any of claims 1 to 5, wherein the concentration of alkali metal hydroxide and sulfuric acid in the feed is from 0.2 to 5% by weight and in the discharge respectively is from 25 to 40% by weight and from 30 to 70% by weight.

7. A process as claimed in any of claims 1 to 6, wherein the alkali metal sulfate solution has added to it from 0.001 to 2% by weight of ammonia or of a primary, secondary or tertiary amine having alkyl of from 1 to 4 carbon atoms on the nitrogen atom, which may also be substituted by hydroxyl or alkoxy.

8. A process as claimed in any of claims 1 to 7, wherein the thermal energy produced by the ohmic voltage loss in the electrodialysis cell is utilized for concentrating the sulfuric acid and the alkali metal hydroxide solution.

## Revendications

1. Procédé de scission de sulfates d'alcalis en acide sulfurique et en lessives alcalines dans une cellule d'électrodialyse divisée en 3 parties, dont l'enceinte anodique est séparée de la chambre médiane par une membrane échangeuse d'anions et dont l'enceinte cathodique est séparée de la chambre médiane par une membrane échangeuse de cations, où l'enceinte anodique est garnie d'une solution aqueuse diluée d'acide sulfurique, l'enceinte cathodique est garnie d'une lessive aqueuse alcaline diluée et la chambre médiane est garnie d'une solution aqueuse de sulfate d'alcali, caractérisé en ce que l'on entreprend l'électrodialyse à des températures de +70°C à +110°C et sous des densités de courant de 2 à 15 kA/m² avec une membrane échangeuse d'anions dont la matrice polymérique, constituée d'un copolymère du styrène et du divinylbenzène avec des radicaux ammonium quaternaire, transversalement réticulés et fortement basiques du type R-CH₂-N-(CH₃)⁺, à l'aide d'un polyéthylène réticulé, où une couche échangeuse d'ions supplémentaire est disposée sur la membrane échangeuse d'ions du côté tourné vers la chambre médiane, laquelle couche contient des radicaux amino secondaires et/ou tertiaires, de faible poids moléculaire, à titre d'agents de blocage des ions hydronium.

2. Procédé suivant la revendication 1, caractérisé en ce que l'on utilise des matériaux pour électrodes perforés, qui se situent directement sur les surfaces de la membrane échangeuse d'ions

3. Procédé suivant les revendications 1 et 2, caractérisé en ce que l'on utilise des anodes dont les surtensions d'oxygène dans la plage des densités de courant revendiquée se situent à moins de 400 mV.

4. Procédé suivant l'une quelconque des revendications 1 à 3, caractérisé en ce que la distance entre la membrane échangeuse de cations et la membrane échangeuse d'anions en la chambre médiane est égale ou inférieure à 5 mm.

5. Procédé suivant l'une quelconque des revendications 1 à 4, caractérisé en ce que l'on utilise dans la chambre médiane des solutions à 10% en poids à saturées de sulfate d'alcali.

6. Procédé suivant l'une quelconque des revendications 1 à 5, caractérisé en ce que les concentrations d'addition pour la lessive alcaline et l'acide sulfurique fluctuent de 0,2 à 5% en poids, les concentrations de sortie pour les lessives alcalines varient de 25 à 40% en poids et les concentrations de sortie pour l'acide sulfurique fluctuent de 30 à 70% en poids.

7. Procédé suivant l'une quelconque des revendications 1 à 6, caractérisé en ce qu'à la solution de sulfate d'alcali, on ajoute 0,001 à 2% en poids d'ammoniac ou d'amines primaires, secondaires ou tertiaires avec des radicaux alkyle qui comportent de 1 à 4 atomes de carbone sur l'atome d'azote, qui peuvent également comporter un radical hydroxyle ou alcoxy à titre de substituant.

8. Procédé suivant l'une quelconque des revendications 1 à 7, caractérisé en ce que l'on exploite l'énergie thermique survenant dans la cellule d'électrodialyse par suite de la perte de tension ohmique en vue de la concentration de l'acide sulfurique et des lessives alcalines.
